## Europäisches Patentamt

## European Patent Office

## Office européen des brevets

(11) Veröffentlichungsnummer: **0 265 371**
**A2**

# (12) EUROPÄISCHE PATENTANMELDUNG

(21) Anmeldenummer: 87810517.0

(22) Anmeldetag: 08.09.87

(51) Int. Cl.⁴: **C 08 F 8/44**
C 08 F 8/32

(30) Priorität: 22.09.86 CH 3806/86
17.10.86 CH 4159/86
22.04.87 DE 3713462

(43) Veröffentlichungstag der Anmeldung:
27.04.88 Patentblatt 88/17

(84) Benannte Vertragsstaaten:
AT BE CH DE ES FR GB GR IT LI LU NL SE

(71) Anmelder: **Gurit-Essex AG**
**CH-8807 Freienbach (CH)**

(72) Erfinder: **Saur, Wolfgang, Dr.**
**Tafletenstrasse 5**
**CH-8863 Buttikon (CH)**

**Schreiber, Herbert**
**Seeblick 3**
**CH-8832 Wollerau (CH)**

(74) Vertreter: **Rottmann, Maximilian R.**
**c/o Rottmann, Quehl & Zimmermann AG Glattalstrasse 37**
**CH-8052 Zürich (CH)**

(54) **Lagerstabile Plastisole und Organosole.**

(57) Plastisole und Organosole mit verbesserter Lagerstabilität, die bei verhältnismässig niedrigen Temperaturen geliert werden können, bestehen aus einer Dispersion aus Carboxylgruppen-haltigen, feinteiligen Polymeren, die mit mehrfunktionellen, basischen Substanzen umgesetzt sind, und Weichmachern. Als basische Substanzen zur Umsetzung können basische Metall-verbindungen mehrwertiger Metalle, insbesondere die Metall-salze von schwachen Säuren, oder mindestens bifunktionelle Aminverbindungen verwendet werden. Diese Plastisole eignen sich besonders zur Beschichtung temperaturempfindlicher flächiger Körper, aber auch für den Einsatz als Dichtungs- und Klebemassen sowie zur Herstellung von Formkörpern.

**Beschreibung**

LAGERSTABILE PLASTISOLE UND ORGANOSOLE

Die vorliegende Erfindungsbeschreibung betrifft gelierbare, lagerstabile Plastisole und Organosole, insbesondere gelierbare, lagerstabile Dispersionen aus feinteiligen Copolymeren, basierend auf mit mehrfunktionellen, basisch reagierenden Substanzen umgesetzten, Carboxylgruppen-haltigen Copolymeren.

Als Plastisole werden Dispersionen bestimmter feinverteilter Homo- und Copolymeren in flüssigen Phasen bezeichnet; wesentlich dabei ist, dass die genannte flüssige Phase mit den Polymerteilchen ein Gemisch innerhalb solcher Viskositätsgrenzen ergibt, welche eine gewerbliche Verarbeitung der Mischung erlauben, ohne dass während der Lagerung die Polymerteilchen sich in der Flüssigphase wesentlich lösen oder darin koagulieren.

Beim Erhitzen der beschriebenen Dispersionen läuft eine irreversible Quellung und Koaleszierung der Polymerteilchen unter Aufnahme - gegebenenfalls Einpolymerisierung - eines wesentlichen Teils der Flüssigphase ab.

Die grundlegenden chemischen Erkenntnisse und englischsprachigen Begriffe betreffend derartiger Dispersionen sind in H.A. Sarvetnick: Plastisols and Organosols (Van Nostrand Reinhold Co. NY, 1972) gegeben. Danach können solche Dispersionen mit < 10% flüchtigen Verdünnern als Plastisole und solche mit > 10% flüchtigen Verdünnern als Organosole bezeichnet werden.

Wesentliches technisches Merkmal solcher Plastisole ist, dass bei üblichen, raumtemperaturnahen Lagerbedingungen die Phasentrennung soweit erhalten bleibt, dass das Produkt fliessfähig ist. Dabei kann die Viskosität von dünnflüssig bis teigartig reichen. Beim Erwärmen gelieren sie, wie gesagt, d.h. sie gehen in einen nicht mehr fliessfähig Zustand über, der von sprödhart über gummiartig bis zu weichzäh reichen kann.

Als Weichmacher, d.h. als Flüssigphase kann jede Flüssigkeit eingesetzt werden, die die genannte Gelierung bei erhöhter Temperatur bewirkt. Wichtig ist eine sehr geringe Flüchtigkeit derselben, da sonst bei Lagerung der ausgelierten Plastisole der Weichmacher allmählich entweichen könnte und unerwünschte Eigenschaftsveränderungen aufträten. Technisch wichtige Weichmacher sind z.B. die Ester der Phthal-, Adipin, Sebacin-, Phosphor- und Citronensäure, chlorierte Kohlenwasserstoffe, flüssige Polyester und epoxidierte natürliche Oele wie Leinöl oder Sojaöl. Als Weichmacher können auch hochsiedende polymerisierbare Flüssigkeiten dienen, die bei der Gelierung einpolymerisiert werden. Als solche dienen z.B. höher siedende, vorwiegend polyfunktionelle Acryl- oder Allylverbindungen. Ausführliche Definitionen des Begriffs "Weichmacher" und der chemisch/physikalischen Wechselwirkung zwischen Weichmacher und Polymerteilchen gibt u.a. K.Weinmann in "Beschichten mit Lacken und Kunst stoffen", Verlag W.A.Colomb, Stuttgart 1967, Seiten 47 bis 158.

Ein wesentliches Merkmal aller Plastisole, insbesondere aber der Nicht-PVC-Plastisole, ist der Zusammenhang zwischen Lagerstabilität und Gelierbarkeit. Um eine genügende Lagerstabilität zu erhalten, muss für ein bestimmtes Polymer ein langsam gelierender Weichmacher gewählt werden. Dieser bedingt aber höhere Geliertemperaturen, die meistens bei mindestens 160°C liegen. Diese hohen Temperaturen werden in vielen Anwendungen als Nachteil empfunden, denn einmal bedingen sie einen hohen Energieverbrauch und zum anderen verunmöglichen sie die Anwendung der Plastisole bei hitzeempfindlichen Materialien. Alle bisherigen Bestrebungen, die Lagerstabilität der Plastisole zu erhöhen, führten auch zu einer schlechteren Gelierbarkeit.

Gemäss ursprünglichem Stand der Technik waren vor allem PVC-Plastisole bekannt; das neuere Wissen in diesem Gebiet umfasst auch andere Polymere, insbesondere Copolymere auf Acrylsäurebasis.

Die zwei DE-OS 2 365 583 und 2 346 651 lehren spezielle, nitrilhaltige Terpolymere, welche auf u.a. aethylenisch-ungesättigten Säure-Monomeren aufgebaut sind. Einige oder alle seitenständigen Carboxylgruppen können neutralisiert werden.

Diese genannte Neutralisation kann mit Ammoniak, das vorzugsweise in Forme einer 28-%igen Lösung in Wasser vorliegt, oder mit irgendeinem primären, sekundären oder tertiären, organischen Mono- oder Polyamin, das einen Siedepunkt von weniger als 250°C aufweist, zuwege gebracht werden. Diese Definition schliesst eine grosse Klasse von organischen Aminen ein, unter denen sich finden:

1. aliphatische oder cycloaliphatische Amine oder Alkanolamine mit 1 bis 4 Kohlenstoffatomen, wie Methylamin, Aethylamin, Triäthylamin, Aethanolamin oder Diäthyläthanolamin;

2. cyclische Amine, wie Morpholin, Piperidin, Cyclohexylamin, Pyridin oder Pyrrolidin;

3. aromatische Amine, wie Anilin, Benzylamin oder Diphenylamin; und

4. polyfunktionelle Amine, wie Aethylendiamin, Diäthylentriamin und Triäthylentetramin.

In den bevorzugten Massen sind etwa 80 % der seitenständigen Carbonsäuregruppen der Terpolymeren mit Triäthylamin oder Diäthyläthanolamin neutralisiert. Die aus den genannten Terpolymeren erhaltenen Plastisole eignen sich zur Herstellung von Überzugsmassen auf Metalloberflächen, z.B. in Blechbehältern.

Die US-PS 4 176 028 beschreibt thermisch koaleszierbare Kunststoffdispersionen basierend auf einem organischen Polyelektro lyten mit mindestens 1 Gew.-% ionisierbaren Monomeren. Speziell werden dazu die Carboxylgruppen der Co- und Terpolymere auf der Basis von Acryl- oder Methacrylsäure umgesetzt zu den entsprechenden Alkalimetallsalzen, Ammonium- und Aminsalzen, und zwar mittels Alkalimetallhydroxid, Ammoniumhydroxid, gasförmigen $NH_3$, Dimethylcocoamin, Triäthylamin, Dimethyloctylamin, Triäthanolamin, Triäthylentetramin u.ä.

Das Polymere wird dabei bevorzugterweise vorerst in seine ionische (Salz-)Form gebracht und dann in das Plastisol oder Organosol eingebaut. Es ist aber auch möglich, das Polymere in seiner nichtionischen Form einzusetzen und dieses in situ durch Zugabe von ionogenen Reaktanden zusammen mit dem Weichmacher und gegebenenfalls andern Komponenten in die Salzform überzuführen.

Die erhaltenen Dispersionen eignen sich als photopolymerisierbare Plastisole.

In den DE-PS 2 454 235 und 2 529 732 wird eine Lösung des oben beschriebenen Stabilitäts-Problems durch Einsatz von gegebenenfalls N-heterocyclische Monomere enthaltenden Acrylpolymerisaten mit einer Tg von nicht kleiner als 35°C mit einer Abstimmung von Tg, Teilchendurchmesser und Zusammensetzung der dispergierten Polymerteilchen und speziellen Weichmachermischungen versucht. Die Neutralisation von beispielsweise Carboxylgruppen an den verwendeten Polymeren scheint hierbei nicht kritisch zu sein.

Mit den genannten Materialien und Massnahmen gelingt jedoch nur eine unvollkommene Problemlösung, da nur angestrebt wird, dass die Viskosität der Plastisole in acht Tagen um nicht mehr als den Faktor 3 ansteigt.

In den DE-PS 2 543 542, 2 722 752 und 2 949 954 werden speziell aufgebaute Methacrylatteilchen beschrieben, die dadurch, dass sie aus einem besonders gut weichmacherverträglichen Kern und einer schlecht weichmacherverträglichen Schale aufgebaut sind, eine gute Lagerstabilität des flüssigen Plastisols zeigen. Die Schale enthält bevorzugterweise Monomereinheiten mit einem basischen Stickstoff; gegebenfalls vorliegende saure und basische Gruppen werden nicht speziell behandelt.

Der GB-PS 2 598 579 sowie den DE-PS 2 812 014, 2 812 015 und 2 812 016 ist die Verwendung von Acrylsäureharzen, welche Ammonium- oder Diaminsalze der zugrundeliegenden Acrylsäurepolymerisate oder -copolymerisate darstellen, in thermisch verschmelzbaren Plastisolen bzw. Organosolen zu entnehmen. Die Umsetzung der säuregruppenhaltigen Polymere geschieht mit den gleichen Mitteln wie in der US-PS 4 176 028. Diese Umsetzung wird in den genannten Patentschriften allgemein mit der Verbesserung des Fliessverhaltens der Dispersionen in Zusammenhang gebracht.

Die zwei US-PS 4 309 331 und 4 421 619 beschreiben photopolymerisierbare Plastisole auf Acrylsäurebasis, in welchen die Car boxylgruppen der Polymerteilchen gegebenenfalls mit Ammoniak neutralisiert sind.

Gemäss der Lehre von DE-AS 2 840 996 werden guthaftende Plastisole auf VC- oder Acrylsäure-Basis erhalten durch eine Erwärmung der Polymerteilchen zusammen mit Haftvermittlern - primär Polyaminoamide.

In der DE-OS 3 308 925 schliesslich wird vorgeschlagen, für Plastisole und Organosole Polymere, wie Vinylestercopolymerisate, (Meth)acrylestercopolymerisate und Weichmacher in freier Auswahl zu Plastisolen und Organosolen zu kombinieren, und zwar dadurch, dass die Dispersionen mit Schutzkolloiden und/oder Emulgatoren bei üblichen, raumtemperaturnahen Lagerbedingungen stabilisiert werden, mit der Massgabe, dass die Stabilisierung bei der Gelierung bei erhöhter Temperatur aufgehoben wird und die als Stabilisator dienenden Schutzkolloide in das resultierende Plastigel integriert werden. Die Schutzkolloide sind höhermolekulare Stoffe; bevorzugte Schutzkolloide bzw. Emulgatoren für die genannten Polymerteilchen sind spezielle Polyamidamine, Polyaminoimidazoline, Polyätherurethanamine, Polyäthylenimine oder Stearylamine.

Aufgabe der hierin beschriebenen Erfindung ist es, Plastisole und Organosole bereit zu stellen, die bei guter Lagerstabilität im Bereich der üblichen Umgebungstemperaturen eine gute Gelierbarkeit bie Temperaturen unter 150°C, ja sogar schon bei unter 100°C aufweisen.

Die Aufgabe wird durch Plastisole und Organosole, insbesondere gelierbare, lagerstabile Dispersionen aus feinteiligen Copolymeren, basierend auf mit mehrfunktionellen, basisch reagierenden Substanzen umgesetzten Carboxylgruppen-haltigen Copolymeren gelöst.

Als Polymere eignen sich feinteilige Copolymerisate von beliebigen Monomeren mit polymerisierbaren Säuren, z.B. Copolymere von Vinylchlorid, Vinylidenchlorid, Acrylaten, Methacrylaten, Maleinaten, Styrol, Methylstyrol, Vinylestern, Vinyläthern, Acrylnitril, Olefinen oder Dienen mit polymerisierbaren Säuren wie z.B. Acryl-, Methacryl-, Itakon-, Croton-, Malein- oder Fumarsäure. Bevorzugt hergestellt werden die Polymere durch Emulsions- oder Suspensionspolymerisation mit anschliessender Sprühtrocknung mit Sekundärteilchen im Bereich von 0,5 bis 50 µm.

Andere geeignete Herstellungsmethoden sind z.B. Fällungspolymerisation, Ausfällen aus Lösung oder Feinmahlung von Polymeren.

Besonders geeignete Copolymere sind solche, die im wesentlichen frei von gebundenem Chlor sind, insbesondere solche, die keine Vinylchlorid-Copolymere sind. Geeignet sind insbesondere Copolymerisate von Acrylnitril, Styrol, (Meth-)-Acrylestern mit polymerisierbaren Carbonsäuren. Die besonders geeigneten Polymere weisen einen Gelanteil von 0,5 bis 30% auf. Unter Gelanteil ist dabei der Anteil an Polymeren zu verstehen, der in einem Lö sungsmittel nicht löslich, sondern lediglich quellbar ist. Er lässt sich z.B. durch Extraktion eines Polymerfilms als nicht extrahierbarer Anteil oder durch Zentrifugieren einer Polymerlösung bestimmen.

Die erfindungsgemässen Plastisole und Organosole, insbesondere die gelierbaren, lagerstabilen Dispersionen aus feinteiligen Copolymeren, basierend auf mit mehrfunktionellen, basisch reagierenden Substanzen umgesetzten, Carboxylgruppen-haltigen Copolymeren, wird dadurch gekennzeichnet, dass die genannten basisch reagierenden Substanzen ausgewählt sind aus

a) mehrwertigen Metallen, insbesondere solchen aus den Gruppen IIa, IIb, IIIa und IIIb des periodischen Systems in reaktionsfähiger Form, deren Oxiden, Hydroxiden, Hydriden oder Carbiden oder deren Salzen von organischern Säuren mit pK-Werten $> 5$ und insbesondere $> 6$, deren metallorganischen Verbindungen, insbesondere Verbindungen mit MeC-, MeO-, MeS- und MeN-Bindungen wie Grignard-Verbindungen, die Metallverbindungen von 1,3-Dicarbonylen oder Alkoholate, Phenolate oder Amide und Xanthogenate der genannten Metalle, oder

b) mindestens bifunktionellen organischen Aminoverbindungen, welche die Aminogruppen an einen aliphatischen oder cycloaliphatischen, mindestens bi-funktionellen Rest mit einer Kette von mehr als zwei, insbesondere mehr als drei aufeinanderfolgenden C-Atomen gebunden haben.

Speziell sind die genannten basisch reagierenden Substanzen die Metalle, Be, Mg, Ca, Sr, Ba, Al oder Zn oder deren Verbindungen beziehungsweise bifunktionelle Amine der allgemeinen Formel

$$\begin{array}{c} R1 \\ \diagdown \\ \diagup \\ R2 \end{array} N - R3(-R4)_n \left[ (R5-)_n \; N \begin{array}{c} \diagup R6 \\ \diagdown R7 \end{array} \right]_m$$

in der

R1, R2, R6 und R7 H, aliphatische oder cylcoaliphatische Reste, vorzugsweise mit maximal 6, insbesondere mit maximal 3 C-Atomen;

R3 und R5 aliphatische oder cycloaliphatische Reste mit mehr als 2, vorzugsweise mehr als 3 C-Atomen oder araliphatische Reste;

R4 ein Hetero-Atom oder eine Heteroatome enthaltende Atomgruppe;

n Null oder Eins; und

m 1 bis 5, vorzugsweise 1 bis 3, insbesondere 1

ist bzw. sind.

Bei Plastisolen und Organosolen auf der Basis von VC-Copolymeren sind als basisch reagierende Substanzen solche Metallverbindungen ausgeschlossen, welche als Stabilisatoren für Polyvinylchlorid bekannt und gebräuchlich sind.

Speziell geeignete Metallverbindungen sind solche der 1,3-Dicarbonyle, wie des Acetylacetons, des Acetessigesters oder des Malonsäureesters.

Bevorzugterweise enthalten die Copolymere der genannten Plastisole und Organosole 0.05 bis 1.5 oder, noch besser, 0.25 bis 0.8 gAe/kg Säuregruppen.

Die bevorzugten Copolymere sind übrigens im wesentlichen frei von gebundenem Chlor, insbesondere frei von Vinylchlorid-Copolymeren und bestehen entweder aus Copolymerisaten mit einem Anteil von 5 bis 60 %, insbesondere 10 bis 45 % Acrylnitril oder aus Copolymerisaten mit einem Anteil von 15 bis 95 %, insbesondere 30 bis 75 % Styrol, Alphamethylstyrol und/oder Vinyltoluol.

Speziell bevorzugt sind dabei Copolymere aus Copolymerisaten mit einem Anteil von 0 bis 50 %, insbesondere 15 bis 30 % Acryl- und/oder Methacrylsäureestern, vorzugsweise aus den Estern von Alkoholen mit 2 bis 12 C-Atomen.

Günstige Verarbeitungseigenschaften weisen die erfindungsgemäs sen Plastisole und Organosole dann auf, wenn die Copolymere einen Gelanteil von 0.5 bis 30 %, vorzugsweise 1 bis 10 % zeigen.

Zur Herstellung der erfindungsgemässen Plastisole und/oder Organosole aus feinteiligen Polymeren und Weichmachern werden die carboxylgruppenhaltigen Polymeren vor, während oder nach dem Zusammenmischen mit dem Weichmacher mit den genannten mehrfunktionellen basisch reagierenden Substanzen umgesetzt.

Die Umsetzung erfolgt vorzugsweise in flüssiger Phase und mindestens oberflächlich.

Die genannte Umsetzung erfolgt in einem Weichmacher bei Temperaturen, bei denen die Gelierzeit in Abwesenheit der basischen Verbindung mindestens 1 Tag, bevorzugt mehr als 7 Tage, insbesondere mehr als 30 Tage beträgt; dabei kann das Polymere im Weichmacher mit der basischen Substanz zunächst bei erniedrigter Temperatur so lange umgesetzt werden, bis es bei Umgebungstemperatur eine erhöhte Lagerstabilität aufweist; ferner kann das Polymere zunächst in einem langsam gelierenden Weichmacher mit der basischen Substanz umgesetzt und danach ein schneller gelierender Weichmacher zugemischt werden.

Andererseits kann die Umsetzung auch in einem Lösungsmittel erfolgen, in welchem die eingesetzten Polymeren unlöslich sind.

Schliesslich kann die Umsetzung auch in Wasser erfolgen, vor zugsweise im Anschluss an die Herstellung des Polymeren vor der Entfernung des Wassers aus der Dispersion.

In allen Fällen kann bei der Umsetzung ein Quellmittel zugegeben werden.

Die Umsetzung sollte mindestens solange fortgesetzt werden, bis die Geliergeschwindigkeit bei Lagertemperatur verlangsamt, vorzugsweise auf die Hälfte oder weniger reduziert ist. Verwendet werden die erfindungsgemässen Plastisole und Organosole für Dichtungen bei Flaschenverschlüssen, für Antidröhnmassen und Bodenschutzmassen in Automobilen, für Nahtabdichtungs- und Verklebungsmittel im Automobilbau, bei der Herstellung von Formkörpern und in der Kunstlederherstellung usw.

Das Fortschreiten der chemischen Umsetzung lässt sich am besten durch Bestimmung des Viskositätsanstiegs bei höheren Temperaturen, z.B. bei 40 und 50°C verfolgen. Wichtig ist dabei nicht die absolute Geschwindigkeit der Viskositätszunahme, sondern vielmehr das relative Verhältnis der Geschwindigkeiten bei verschiedenen Temperaturen. Dieses wird mit fortschreitender Umsetzung grösser, d.h. bei niedrigen Temperaturen wird die Viskositätszunahme langsamer, während sie bei hohen Temperaturen unverändert oder sogar beschleunigt sein kann.

Ferner lässt sich der Umsetzungsgrad auch durch analytische Methoden ermitteln, so durch Bestimmung des Carboxylgruppenge halts im Polymeren oder des Basengehalts nach Abtrennen des Polymeren.

Als Medien für die Durchführung der Umsetzung eignen sich auch Wasser oder beliebige Lösungsmittel, in welchen das Polymer nicht löslich ist. Die Umsetzung in Wasser wird zweckmässigerweise im Anschluss an die Polymerisation, die üblicherweise ebenfalls im wässrigen Medium erfolgt, vor der Sprühtrocknung durchgeführt. Wie schon ausgeführt, können dabei Quellungsmittel für das Polymere zugesetzt werden.

Bei der Umsetzung in Lösungsmittel können diese anschliessend teilweise oder ganz nach bekannten Methoden, wie Filtrieren, Zentrifugieren oder Abdampfen, entfernt werden, im letzteren Fall auch nach Zugabe des Weichmachers und/oder weiterer Bestandteile. Bei Organosolen kann sich diese Massnahme erübrigen.

Die Herstellung der Plastisole/Organosole erfolgt ansonsten in der üblichen Weise durch Abmischen der Komponenten in geeigneten Misch- und Rührvorrichtungen und gegebenenfalls Abreiben, z.B. auf dem Walzenstuhl oder der Mühle und Entgasen im Vakuum.

Neben den erfindungsgemässen Bestandteilen der Plastisole bzw. Organosole können gegebenenfalls Hilfsstoffe zugesetzt sein, z.B. Viskositätsregler, Verdünnungsmittel, Sedimentationsverhüter, Verlaufsverbesserer, Riechstoffe, Netzmittel, Haftvermittler, Alterungs-, Oxydations- und UV-Schutzmittel, Blähmittel für Schäume, Monomere, Natur- und/oder Kunstharze oder deren Ausgangs- oder Zwischenprodukte, Polymerisationsinitiatoren, -Inhibitoren und -Regler, Streckmittel, Pigmente und Füllstoffe organischer und/oder anorganischer Natur sowie löslicher Farbstoff und andere in der Beschichtungs- und Plastisoltechnologie übliche Hilfsstoffe.

Die erfindungsgemässen Plastisole können sehr vielseitige Verwendung finden. Typische Verwendungsbeispiele sind die Beschichtungen von textilen Geweben für Planen und Bekleidungsstoffe, wobei die niedrige Geliertemperatur besonders vorteilhaft ist, Dichtungen für Kronkorken, Beschichtungen wie z.B. Antidröhnmassen und Unterbodenschutzmassen für Automobile, Nahtabdichtungs- und Verklebungsmittel im Automobilbau mit besonders niedrigen Einbrenntemperaturen, Formkörper, Folien, Schichtstoffe und Kunstleder.

Die Verarbeitung der erfindungsgemäss hergestellten Plastisole erfolgt nach der üblichen Plastisol-Technologie.

Die nachfolgenden Beispiele, die keinesfalls einschränkenden Charakter besitzen, dienen dazu, die erfindungsgemässen Plastisole und Organosole sowie deren Eigenschaften näher zu erläutern.

## BEISPIELE

### Beispiele 1 A und 1 B

Aus einem sprühgetrockneten Emulsionspolymerisat von Methylmethacrylat mit 2% Itakonsäure werden folgende Plastisole hergestellt:

1 A: 100 g Polymer
150 ml Benzyloctylphthalat
1 B: 100 g Polymer
150 ml Benzyloctylphthalat
5 g Zinkoxyd

Beide Proben sind anfangs dünn pastös. Nach Lagerung bei 23°C ist Probe 1 A nach 20 Tagen teigartig eingedickt, Probe 1 B immer noch pastös. Bei 120°C gelieren beide Proben zu weichen, elastischen Gelen; Shore Härte bei 1 A = A 16, bei 1 B = A 20.

### Beispiele 2 A und 2 B

Aus dem sprühgetrockneten Emulsionspolymerisat aus 82% Styrol, 15% Butylacrylat und 3% Acrylsäure wurden folgende Plastisole hergestellt:

2 A: 50 g Polymerisat
55 g Di-isodecyl-adipat
2 B: 50 g Polymerisat
55 g Di-isodecyl-adipat
2 g Zinkoxyd

Die teigigen Plastisole werden 2 Tage bei 8°C, dann bei 23°C gelagert. Während Probe 2 A nach 8 Tagen geliert ist, bleibt Probe 2 B nach 14 Tagen immer noch knetbar. Bei 100°C bilden beide Plastisole elastische Gele.

### Beispiele 3 A und 3 B

Dieses Beispiel zeigt die Einwirkung von Zinkoxyd auf ein relativ schnell gelierendes Plastisol. Es wurde ein sprühgetrocknetes Emulsionspolymerisat der Zusammensetzung 52% Styrol, 30% Acrylnitril, 15% Butylacrylat, 3% Acrylsäure verwendet.

Zusammensetzung der Plastisole:

| Beisp.Nr. | Polymer | Benzyloctylphthalat | Zinkoxyd |
|-----------|---------|---------------------|----------|
| 3 A | 40 g | 60 ml | - |
| 3 B | 40 g | 60 ml | 2 g |

Die beiden Plastisole wurden einer Reifung bei 8° unterworfen. Tabelle 1 zeigt die Ergebnisse von Viskositäts- und Stabilitätsmessungen. Bei den ungereiften Proben ist zunächst sowohl die Anfangsviskosität bei 10°C als auch die Geschwindigkeit der Viskositätszunahme bei 50°C durch den Zinkoxydzusatz erhöht. Nach 14 Tagen Reifung bleibt bei 3 A die Viskosität praktisch unverändert und die Zeit bis zum Erreichen von 100 Pas bei 50°C

TABELLE 1

| Beispiel Nr. | Reifung bei 8°C (Tage) | Stabilität bei 23°C Tage bis | | | Zeit bis 100 Pas bei °C | | | Viskosität bei 10°C $D=10\ s^{-1}$ |
|---|---|---|---|---|---|---|---|---|
| | | flüssig | pastös | geliert | 40°C | 50°C | 60°C | |
| 3 A | 0 | | | | | 705" | | 5.27 |
| | 14 | 0 | 4 | 7 | | 606" | | 5.25 |
| | 43 | | | | 6590" | | 81" | |
| 3 B | 0 | | | | | 570" | | 6.15 |
| | 8 | | | | | 1235" | | |
| | 14 | 0 | 24 | 30 | | 1230" | | 4.38 |
| | 43 | | | | 29250" | | 160" | |
| Verhältnis Zeit B Zeit A | 0 | | | | | 0.8:1 | | |
| | 14 | | 6:1 | 4,5:1 | | 2:1 | | |
| | 43 | | | | 4.4:1 | | 2:1 | |

nimmt von 705" auf 606" ab. Bei Probe 3 B mit Zinkoxyd nimmt infolge der Reifung die Viskosität (10°C) deutlich ab und die Lagerzeiten bei 23°C erhöhen sich recht beträchtlich bis auf das 6-fache der Probe 3 A. Die relative Dauer bis 100 Pas wird umso weniger erhöht, je höher die Messtemperatur liegt und bei 100°C lassen sich beide Proben gleich gut gelieren.

Beispiele 4 A bis 4 G

400 g eines sprühgetrockneten Emulsionspolymerisats aus 42% Styrol, 40% Acrylnitril, 15% Butylacrylat und 3% Acrylsäure werden mit 600 ml Benzylbutylphthalat gemischt. Je 100 g dieses Plastisols werden mit je 2 g der in Tabelle 2 angegebenen Zusätzen gemischt und abgerieben. Danach werden die Plastisole zunächst 8 Tage bei 8°C gereift und anschliessend bei 23° bis 25°C gelagert und die Zeit bestimmt, in der die anfangs flüssigen Plastisole teigartig viskos geworden sind. Ferner wurden aus den Plastisolen Scheiben gegossen, im Vakuum entlüftet und je 20 Min. bei 100°C und 120°C geliert. An den Gelen wurden die Shore-Härten und Zugdehnungen sowie einige Zugfestigkeiten bestimmt.

Wie die Werte in Tabelle 2 zeigen, wird durch die Zusätze nicht nur die Lagerbeständigkeit wesentlich verlängert, sondern auch die Härte und Festigkeit der Gele erhöht.

TABELLE 2

| Beispiel Nr. | Zusatz | teigartig bei 23° C nach Tagen | geliert bei | | | | |
|---|---|---|---|---|---|---|---|
| | | | 100° | | | 120° | |
| | | | Zugfestig-keit N/mm$^2$ | Shore A | Dehnung | Shore A | Dehnung |
| 4 A | kein Zusatz | 7 | 1.3 | 13 | 450% | 16 | 470% |
| 4 B | Zink-dimethyl-dithio-carbamat | 21 | | 28 | 320% | 27 | 500% |
| 4 C | Aluminium-isopropylat | 30 | | 28 | 300% | 27 | 400% |
| 4 D | Al-acetylacetonat | 30 | | 25 | 200% | 32 | 200% |
| 4 E | Magnesium-Aethylat | 30 | | 28 | 400% | 27 | 420% |
| 4 F | Isophorondiamin | 30 | | 23 | 500% | 25 | 570% |
| 4 G | Zinkoxyd | 90 | 1.8 | 30 | 260% | 34 | 400% |

Beispiele 5 A bis 5 D

In je 60 ml Diphenylkresylphosphat wurden je 2 g der in nachfolgender Tabelle 3 angegebenen Zusatzstoffe und anschliessend 50 g des Poymerisates gemäss Beispiel 4 eingemischt. An diesen Plastisolen wurde die Viskosität bei 50° C und die Lagerstabilität bei 23° C (Tage bis zum Gelieren) bestimmt. Ferner wurden an gelierten Proben (20 min bei 100° C) die Shorehärten und Zugdehnungen gemessen.

Wie Tabelle 3 zeigt, wird die Lagerstabilität nur durch Isophorondiamin verbessert, während die Vergleichsproben 5 B und 5 C sogar eine deutlich kürzere Stabilität und auch eine wesentlich höhere Viskosität bei 50° C als der Blindversuch 5 A aufweisen.

TABELLE 3

| Beispiel No. | Zusatz | Viskosität während der stabilen Phase | Zeit bis 200 Pas sec. | Lagerstabilität bei 23° C Tage | Shore A nach 3 s | Zugdehnung % |
|---|---|---|---|---|---|---|
| 5 A | keiner | 4 | 145 | 7 | 13 | 350 |
| 5 B | Ethylendiamin | 174 | 9 | 2 | 19 | 300 |
| 5 C | Diethylentriamin | 141 | 19 | 2 | 14 | 300 |
| 5 D | Isophorondiamin | 19 | 350 | 24 | 23 | 400 |

Beispiel 6 A bis 6 E

Je 100 g des Polymeren gemäss Beispiel 3 wurden in 500 g Isopropanol unter Zusatz der in nachfolgender Tabelle 4 angegebenen Amine während 5 h geschüttelt, dann abfiltriert und bei 50° C getrocknet. Aus den Polymeren und Benzyloctylphthalat wurden im Gewichtsverhältnis 40:60 Plastisole hergestellt und deren Lagerstabilität bei 30° C bestimmt. Ferner wurde das Zugdehnungsverhalten nach Gelierung während 20 min bei 70° C ermittelt. Wie Tabelle 4 zeigt, wird bei den behandelten Proben die Lagerstabilität auf das 5- bis 6-fache erhöht, während die Geleigenschaften trotz der extrem niedrigen Geliertemperatur eine deutliche Verbesserung aufweisen.

TABELLE 4

| Beispiel No. | Amin | g/100 g | Aequivalent $NH_2$:COOH | Tage bis Gelieren | Zugversuch $N/mm^2$ Modul bei 100 % | 200 % | Bruch | % |
|---|---|---|---|---|---|---|---|---|
| 6 A | nicht umgesetzt | --- | --- | 2 | 0.13 | 0.33 | 0.66 | 260 |
| 6 B | Isophorondiamin | 3.5 | 1:1 | 11 | 0.41 | 1.22 | 1.76 | 250 |
| 6 C | Isophorondiamin | 5.3 | 1.5:1 | 11 | 0.38 | 1.11 | 1.53 | 234 |
| 6 D | 1,4-Propylendiamin | 1.55 | 1:1 | 11 | 0.37 | 1.28 | 1.85 | 236 |
| 6 E | 1,4-Propylendiamin | 2.3 | 1.5:1 | 10 | 0.35 | 1.05 | 1.69 | 250 |

**Patentansprüche**

1. Plastisole und Organosole, insbesondere gelierbare, lagerstabile Dispersionen aus feinteiligen Copolymeren, basierend auf mit mehrfunktionellen, basisch reagierenden Substanzen umgesetzten, carboxylgruppenhaltigen Copolymeren, dadurch gekennzeichnet, dass die basisch reagierenden Substanzen ausgewählt sind aus
a) mehrwertigen Metallen, insbesondere solchen aus den Gruppen IIa, IIb, IIIa und IIIb des periodischen Systems in reaktionsfähiger Form,
der Oxiden, Hydroxiden, Hydriden oder Carbiden oder deren Salzen von organischen Säuren mit pK-Werten > 5 und insbesondere > 6,
deren metallorganischen Verbindungen, insbesondere Verbindungen mit MeC-, MeO-, MeS- und MeN-Bindungen wie Grignard-Verbindungen, die Metallverbindungen von 1,3-Dicarbonylen oder Alkoholate, Phenolate oder Amide und Xanthogenate der genannten Metalle, oder
b) mindestens bifunktionellen organischen Aminoverbindungen, welche die Aminogruppen an einen aliphatischen oder cycloali phatischen, mindestens bi-funktionellen Rest mit einer Kette von mehr als zwei, insbesondere mehr als drei aufeinanderfolgenden C-Atomen gebunden haben.

2. Plastisole und Organosole nach Anspruch 1, dadurch gekennzeichnet, dass die basisch reagierenden Substanzen die Metalle Be, Mg, Ca, Sr, Ba, Al oder Zn oder deren Verbindungen sind.

3. Plastisole und Oranosole nach Anspruch 1, dadurch gekennzeichnet, dass die bifunktionellen Amine Verbindungen der allgemeinen Formel

$$\begin{array}{c} R1 \\ {\Large >} N - R3(-R4)_n \\ R2 \end{array} \left[ (R5-)_n \; N {\Large <} \begin{array}{c} R6 \\ R7 \end{array} \right]_m$$

sind, in der
R1, R2, R6 und R7 H, aliphatische oder cycloalophatische Reste, vorzugsweise mit maximal 6, insbesondere mit maximal 3 C-Atomen;
R3 und R5 aliphatische oder cycloaliphatische Reste mit mehr als 2, vorzugsweise mehr als 3 C-Atomen oder araliphatische Reste;
R4 eine Hetero-Atom oder eine Heteroatome enthaltende Atomgruppe;
n Null oder Eins; und
m 1 bis 5, vorzugsweise 1 bis 3, insbesondere 1 ist bzw. sind.

4. Plastisole und Organosole nach Anspruch 1 oder 2, dadurch gekennzeichnet, dass bei Plastisolen und Organosolen auf der Basis von VC-Copolymeren als basisch reagierende Substanzen solche Metallverbindungen ausgeschlossen sind, welche als Stabilisatoren für Polyvinylchlorid bekannt und gebräuchlich sind.

5. Plastisole und Organosole nach Anspruch 1 oder 2, dadurch gekennzeichnet, dass die Metallverbindungen der 1,3-Dicarbonyle solche des Acetylacetons, des Acetessigesters oder des Malonsäureesters sind.

6. Plastisole und Organosole nach einem der vorangehenden Ansprüche, dadurch gekennzeichnet, dass die Copolymere 0.05 bis 1.5, bevorzugt 0.25 bis 0.8 gAe/kg Säuregruppen enthalten.

7. Plastisole und Organosole nach einem der vorangehenden Ansprüche, dadurch gekennzeichnet, dass die besagten Copolymere im wesentlichen frei von gebundenem Chlor, insbesondere frei von Vinylchlorid-Copolymeren sind.

8. Plastisole und Organosole nach einem der vorangehenden Ansprüche, dadurch gekennzeichnet, dass die besagten Copolymere aus Copolymerisaten mit einem Anteil von 5 bis 60 %, insbesondere 10 bis 45 % Acrylnitril bestehen.

9. Plastisole und Organosole nach Anspruch 8, dadurch gekennzeichnet, dass die besagten Copolymere aus Copolymerisaten mit einem Anteil von 15 bis 95 %, insbesondere 30 bis 75 % Styrol, Alphamethylstyrol und/oder Vinyltoluol bestehen.

10. Plastisole und Organosole nach Anspruch 8 oder 9, dadurch gekennzeichnet, dass die Copolymere aus Copolymerisaten mit einem Anteil von 0 bis 50 %, insbesondere 15 bis 30 % Acryl-und/oder Methacrylsäureestern bestehen, vorzugsweise aus den Estern von Alkoholen mit 2 bis 12 C-Atomen.

11. Plastisole und Organosole nach einem der vorangehenden Ansprüche, dadurch gekennzeichnet, dass die Copolymere einen Gelanteil von 0.5 bis 30 %, vorzugsweise 1 bis 10 % aufweisen.

12. Verfahren zur Herstellung von Plastisolen und/oder Organosolen aus feinteiligen Polymeren und Weichmachern nach Anspruch 1, dadurch gekennzeichnet, dass die carboxylgruppenhaltigen Polymeren vor, während oder nach dem Zusammenmischen mit dem Weichmacher mit mehrfunktionellen basisch reagierenden Substanzen umgesetzt werden.

13. Verfahren nach Anspruch 12, gekennzeichnet durch die Verwendung eines Polymeren und einer basischen Substanz gemäss einem der Ansprüche 2 bis 11.

14. Verfahren nach Anspruch 12 oder 13, dadurch gekennzeichnet, dass die Umsetzung in flüssiger Phase erfolgt.

15. Verfahren nach Anspruch 12, 13 oder 14, dadurch gekennzeichnet, dass die Umsetzung mindestens oberflächlich erfolgt.

16. Verfahren nach Anspruch 12, dadurch gekennzeichnet, dass die Umsetzung in einem Weichmacher erfolgt bei Temperaturen, bei denen die Gelierzeit in Abwesenheit der basischen Verbindung mindestens 1 Tag, bevorzugt mehr als 7 Tage, insbesondere mehr als 30 Tage beträgt.

17. Verfahren nach Anspruch 16, dadurch gekennzeichnet, dass das Polymere im Weichmacher mit der basischen Substanz zunächst bei erniedrigter Temperatur so lange umgesetzt wird, bis es bei Umgebungstemperatur eine erhöhte Lagerstabiliät aufweist.

18. Verfahren nach Anspruch 16, dadurch gekennzeichnet, dass das Polymere zunächst in einem langsam gelierenden Weichmacher mit der basischen Substanz umgesetzt wird und danach ein schneller gelierender Weichmacher zugemischt wird.

19. Verfahren nach Anspruch 14, dadurch gekennzeichnet, dass die Umsetzung in einem Lösungsmittel erfolgt, in welchem die eingesetzten Polymeren unlöslich sind.

20. Verfahren nach Anspruch 19, dadurch gekennzeichnet, dass das Lösungsmittel nach der Umsetzung ganz oder teilweise entfernt wird.

21. Verfahren nach Anspruch 14, dadurch gekennzeichnet, dass die Umsetzung in Wasser erfolgt, vorzugsweise im Anschluss an die Herstellung des Polymeren vor der Entfernung des Wassers aus der Dispersion.

22. Verfahren nach einem der Ansprüche 12 bis 21, dadurch gekennzeichnet, dass bei der Umsetzung ein Quellmittel zugegeben wird.

23. Verfahren nach einem der Ansprüche 12 bis 22, dadurch gekennzeichnet, dass die Umsetzung mindestens solange erfolgt bis die Geliergeschwindigkeit bei Lagertemperatur verlangsamt, vorzugsweise auf die Hälfte oder weniger reduziert ist.

24. Verwendung der Plastisole und Organosole nach einem der Ansprüche 1 bis 11 für Dichtungen bei Flaschenverschlüssen, für Antidröhmassen und Bodenschutzmassen für Automobile, Nahtabdichtungs- und Verklebungsmittel im Automobilbau, Herstellung von Formkörpern und in der Kunstlederherstellung.